# EUROPEAN PATENT APPLICATION

(11) **EP 2 101 085 A1**
(43) Date of publication of application: **16.09.2009**
(21) Application number: 09153348.9
(22) Date of filing: 20.02.2009
(51) Int. Cl.: F16H 48/00, F16H 48/10

(54) **A mechanical differential**

(30) Priority: 05.03.2008 IT MO20080061
(71) Applicant: OMCI S.p.A. Officine Metalmeccaniche Costruzioni Industriali, 41013 Castelfranco (Modena) (IT)
(72) Inventor: Magni, Giorgio, 41100 Modena (IT)
(74) Representative: Colò, Chiara

(57) **Abstract**

A mechanical differential comprises a containing body (2) rotatable about a main axis of rotation (X), two axle shafts (7, 8) rotatably coupled to the containing body (2) such as to rotate relative to the containing body (2) and about the main axis of rotation (X), at least an intermediate wheel (13, 14), rotatably fitted on the containing body (2) and operatively acting between the two shafts (7, 9) such as to transmit mechanical action between the two shafts (7, 8). The intermediate wheel (13, 14) is supported on the containing body (2) by means of a plurality of rollers (R) such as to reduce friction resulting from rotation of the intermediate wheel (13, 14).

## Description

The invention relates to a mechanical differential particularly suited for use on vehicles exhibiting a small turning circle, for example machines for handling goods and containers, including fork lift trucks, container lift trucks, and the like.

A known type of mechanical differential exhibits an external casing rotatable about an axis of rotation, a pair of axle shafts projecting from the casing also rotatable about the axis of rotation, and one or more intermediate wheels fitted to the casing and acting between the two axle shafts by geared enmeshing with the axle shafts. The external casing is rotatably connected to the engine shaft of the vehicle, while the group comprising the casing, axle shafts, and intermediate wheels enables the two axle shafts to rotate at different speeds.

Each axle shaft is connected to a relative wheel of the vehicle carriage (front carriage or rear carriage) and the presence of a differential permits the two wheels to rotate at different speeds in order to avoid slipping of wheels when turning resulting from turning trajectories of different lengths.

In the mechanical differentials described above, the rotation speed of the intermediate wheels is greater in direct proportion to the magnitude of difference between the rotation speeds of the two axle shafts.

Furthermore, in differentials of known type the intermediate wheels are rotatingly fitted on the casing of the differential using a sliding coupling, wherein the rotation shaft of an intermediate wheel is coupled directly, steel to steel, to a respective cylindrical seating in the differential cross shaft, or alternatively coupled by interposition of a sliding bearing.

The sliding coupling between the intermediate wheel and the differential casing generates a high level of sliding friction, which results in a significant loss of power. The magnitude of power loss is directly proportional to the rotational speed of the intermediate wheels, and the magnitude is consequently directly proportional to the relative difference between the rotational speeds of the two axle shafts. Fork lift trucks are particularly subject to the power losses described above because these vehicles have an extremely small turning circle, to the extent that often when turning the internal wheel remains almost stationary and only the outside wheel moves.

As regards vehicles exhibiting "traditional" turning circles, for example motor vehicles, trailer trucks, and the like, power losses as described above, though reducing the efficiency of the transmission, can assist a correct distribution of the drive force, also in conditions of poor road adherence (avoiding the possibility that one of the two axle shafts, as a consequence of the sliding of the relative wheel, prevents the transmission of power to the other axle shaft and consequently prevents the vehicle from moving). In contrast, the effect of the power dissipation on vehicles exhibiting small turning circles is of such magnitude that the single outcome is a significant reduction in the efficiency of the transmission. In such cases, power dissipation between the motor shaft and wheels is calculated as at least 30%, resulting in increased fuel consumption in the case of vehicles with internal combustion engines, and reduced autonomy for vehicles using battery-supplied electric motor drives.

In addition to the above mentioned inconvenience, for vehicles with a small turning circle the dissipation of power produces a significant turning resistance, which negatively affects the driveability of vehicles and increases wear on tyres, in particular as regards the tyres on the steering wheels.

The technical aim of the present invention is to provide a mechanical differential that obviates the inconveniencies described above.

Specifically, the invention aims to provide a relatively efficient mechanical differential, affected by relatively low power dissipation.

A further aim of the invention is to provide a mechanical differential providing good driveability for the vehicle on which the differential is installed.

These aims and others besides, as will better emerge from the following description, are substantially achieved by a mechanical differential exhibiting the characteristics described in claim 1 and/or in one or more of the claims dependent on claim 1.

A further aim of the invention is a vehicle having a small turning circle and comprising a mechanical differential of the present invention and exhibiting the characteristics described in claims 11 or 12.

Further characteristics and advantages of the invention will better emerge from the detailed description made herein, provided by way of nonlimiting example in the accompanying figures of the drawings, in which:
- figure 1 is a cross-sectional view, along line I-I of figure 2, of a mechanical differential of the invention;
- figure 2 is a cross-sectional view of the differential of figure 1 along line II-II of figure 1.

In the attached figures of the drawings, a mechanical differential of the present invention is globally labelled as 1.

The differential 1 comprises a containing body 2 rotatably coupled to a "T" frame of a vehicle such as to rotate about a main axis of rotation (X).

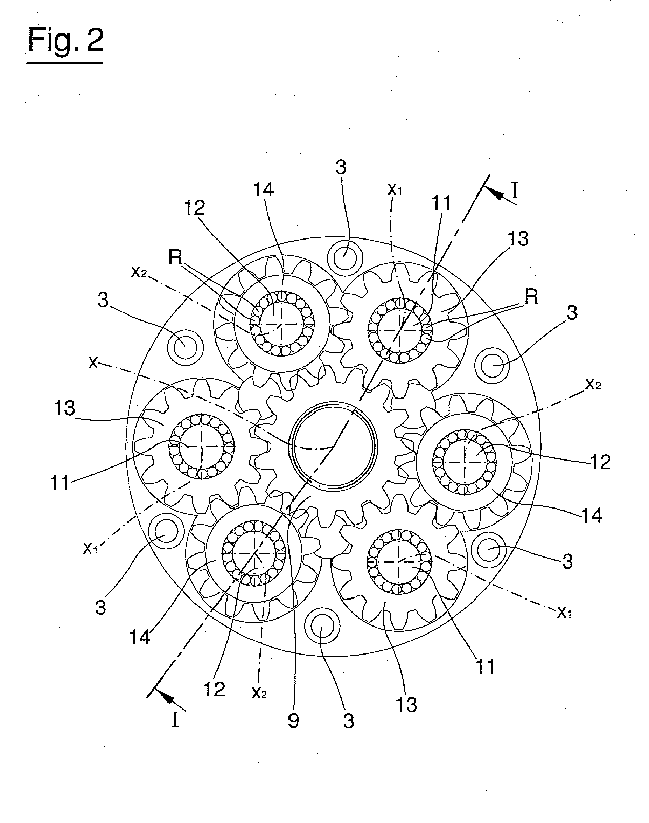

The containing body 2 comprises a pair of half shells 2a, 2b couplable to each other by matching along the main axis of rotation "X", and stably associable using a plurality of threaded bodies (the fixing seatings thereof labelled as 3 in figure 2).

The containing body 2 exhibits an external threaded surface 4 engageable by enmeshing with a conical wheel 5 which receives a mechanical drive from a drive shaft 6 of the vehicle.

The differential 1 is rotatably engageable to a pair of shafts or axle shafts 7, 8 both exhibiting a grooved end 7a, 8a insertable into the containing body 2. Each shaft or axle shaft 7, 8 is connectable to a relative wheel of the vehicle.

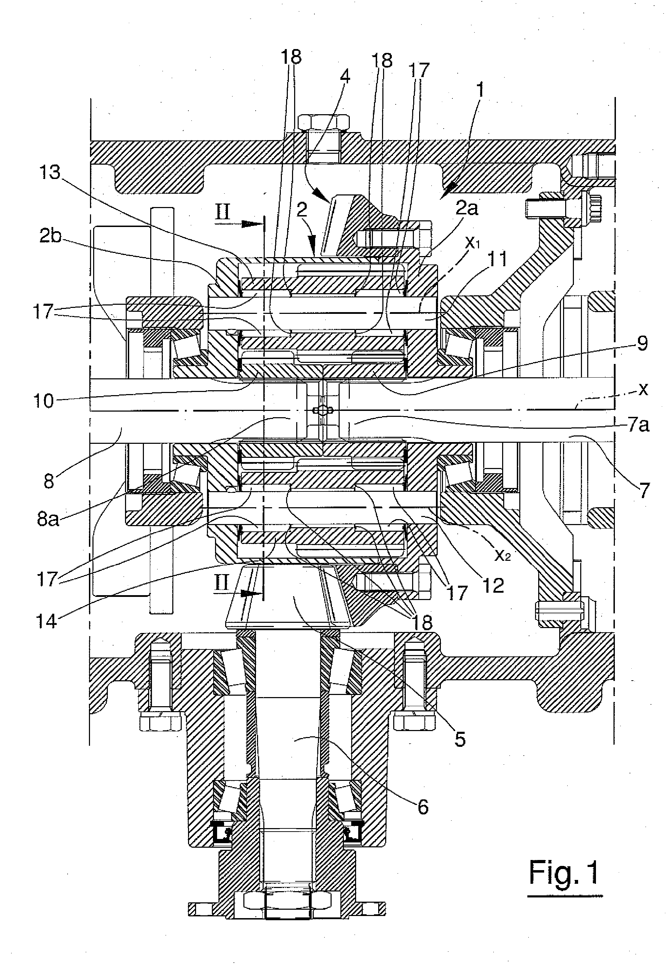

The two shafts 7, 8 are couplable to the containing body 2 such as to rotate relative to the containing body 2 and about the main axis of rotation "X". Fitted to each grooved end 7a, 8a of the shafts 7, 8 is a respective externally threaded pinion 9, 10. In the embodiment illustrated in figure 1, the two pinions 9, 10 are positioned in contact along the main axis of rotation (X). The differential 1 also comprises at least two auxiliary shafts 11, 12 rotatably mounted on the containing body 2 such as to rotate about respective axes of rotation "X1", "X2" parallel and eccentric relative to the main axis of rotation "X". The axes of rotation "X1", "X2" are stationary with respect to the containing body 2.

In the embodiment of the invention illustrated in the attached figures, the differential 1 comprises a plurality of auxiliary shafts 11, 12 rotatable about respective axes of rotation "X1", "X2", which are arranged around, and parallel to, the main axis of rotation "X". The ends of each auxiliary axis 11, 12 are supported by the containing body 2 and, preferably, the auxiliary shafts 11, 12 are stably connected to the containing body 2.

Intermediate wheels 13, 14 are rotatably mounted on each auxiliary shaft 11, 12. Each intermediate wheel 13, 14 is connected by enmeshing to one of the pinions 9, 10 and to the other intermediate wheel 13, 14 for the transmission of mechanical action between the intermediate wheels 13, 14. The plurality of intermediate wheels 13, 14, fitted to respective auxiliary shafts 11, 12, forms a plurality of pairs of intermediate wheels 13, 14 arranged about a main axis of rotation "X". Otherwise stated, each intermediate wheel 13, 14 is operatively interposed between a pinion 9, 10 and a relative other intermediate wheel 13, 14. As shown in figure 1, each intermediate wheel 13, 14 exhibits an external thread which enmeshes with the external thread of a respective pinion 9, 10 to which the intermediate wheel 13, 14 is coupled, but which does not enmesh with the other pinion 9, 10. This is achieved by limiting the extension of both the thread of the intermediate wheels 13, 14, and the thread of the pinions 9, 10 along the main axis of rotation "X". Furthermore, the external thread of each intermediate wheel 13, 14 superimposes on and enmeshes with the external thread of the relative other intermediate wheel 13, 14.

In this situation, when for example the shaft 7 is rotated, the respective pinion 9 is also driven in rotation, the pinion 9 in turn driving the intermediate wheel 13 which in turn drives the other intermediate wheel 14. The other intermediate wheel 14 enmeshes with the pinion 10 driving the pinion 10 in rotation and consequently driving the other shaft 8. Advantageously, between each intermediate wheel 13, 14 and the respective auxiliary shaft 11, 12 rolling elements are interposed, acting to rotatably support the intermediate wheel 13, 14 relative to the auxiliary shaft 11, 12, forming a low frictional coefficient interface. Preferably, the rolling elements comprise a plurality of rollers "R", clearly visible in the section view of figure 2.

In more detail, between an internal surface of each intermediate wheel 13, 14 and an external cylindrical surface of a respective auxiliary shaft 11, 12 at least an annular seating 17 is provided, wherein the rollers "R" rotate. Preferably, between each intermediate wheel 13, 14 and the respective auxiliary shaft 11, 12 two seatings 17 are provided, located at opposite axial ends of the intermediate wheel 13, 14.

Each seating 17 is obtained by varying the diameter of the internal surface, or using a spacer, of each intermediate wheel 13, 14 or of the external cylindrical surface of the auxiliary shaft 11, 12. In the illustrated embodiment, the seatings 17 are obtained by two opposite variations in diameter of the internal surface of the intermediate wheels 13, 14. The two opposite variations in diameter respectively define internal shoulders 18 supporting the corresponding axial ends of the rollers "R". These seatings can also be formed using rings, or a single seating filled with rollers is possible.

The seatings 17 thus define respective rolling tracks that develop around the main axis of rotation "X".

In an embodiment of the invention not illustrated, the rollers "R" can be replaced by rolling-contact shells, preferably roller type, interposed between the internal surface of the intermediate wheels 13, 14 and the external cylindrical surface of the auxiliary shafts 11, 12.

A differential configured in this way, in response to a rotary movement imposed on the containing body 2 by the preferably conical wheel 5, enables the two shafts 7, 8 to rotate at different rotation speeds, avoiding sliding of vehicle wheels associated to the shafts 7, 8, in particular when the vehicle is turning.

The differential 1 is advantageously applicable on vehicles having a small turning circle. It is noted that, in the context of the present description, a small turning circle is defined as a turning radius smaller than that of typical road vehicles (motorcars, trucks, and similar), exhibiting a steering angle greater than 45°, such that the internal wheel of the non steering axis remains almost stationary during the turning motion of the vehicle. This occurs routinely to vehicles including fork lift trucks and machines for handling containers and goods, wherein the forward axis supports a pair of non-steering wheels while the rear wheels are steering wheels. The rear steering wheels of these vehicles achieve steering angles greater than 45° resulting in a very significant difference in rotational speeds between the wheels of the forward axis, on which the differential is fitted. The present invention attains the proposed aims and obviates the disadvantages described in known art.

The introduction of rolling elements between the intermediate wheels and the respective auxiliary shafts reduces friction and consequently reduces energy dissipation, in particular in vehicles exhibiting high intermediate wheel rotation speeds, or in vehicles exhibiting high steering angles (and consequently small turning circles).

A further consequence is reduced vehicle energy consumption and extended operating autonomy as regards battery-powered fork lift trucks.

Further advantages include reduced wear on tyres as a consequence of reduced turning resistance, together with improved driveability and manoeuvrability.

## Claims

1. A mechanical differential comprising:
a containing body (2) rotatable about a main axis of rotation (X);
two shafts (7, 8) rotatably coupled to the containing body (2) such as to rotate relative to the containing body (2) and about the main axis of rotation (X), each of the shafts (7, 8) being connectable to a wheel of a vehicle;
at least an intermediate wheel (13, 14), rotatably fitted on the containing body (2) and operationally acting between the shafts (7, 9) to transmit mechanical action between the two shafts (7, 8); **characterized in that** the at least an intermediate wheel (13, 14) is coupled to the containing body (2) using a rolling coupling.

2. The differential of claim 1, **characterized in that** it comprises a plurality of rolling elements, interposed between the at least an intermediate wheel (13, 14) and the containing body (2) in order to support the at least an intermediate wheel (13, 14) to the containing body (2) and defining the rolling coupling.

3. The differential of claim 2, **characterized in that** it comprises at least an auxiliary shaft (11, 12) supported by the containing body (2), the at least an intermediate wheel (13, 14) being mounted on the auxiliary shaft (11, 12) by means of interposing of rolling elements.

4. The differential of claims 2 or 3, **characterized in that** the rolling elements comprise a plurality of rollers (R).

5. The differential of claims 3 and 4, **characterized in that** the rollers (R) are directly interposed between an internal surface of the at least an intermediate wheel (13, 14) and an external surface of the respective auxiliary shaft (11, 12).

6. The differential of claim 2 or 3, **characterized in that** the rolling elements comprise at least a rolling-contact bearing equipped with a plurality of rollers (R).

7. The differential of claim 1, **characterized in that** it comprises at least two intermediate wheels (13, 14) rotatable about respective axes of rotation (X1, X2), the axes of rotation (X1, X2) being parallel and eccentric relative to the main axis of rotation (X), each of the intermediate wheels (13, 14) being operationally interposed by means of an enmeshing between a shaft of the shafts (7, 8) and another of the intermediate wheels (13, 14) such as to transmit a mechanical action between the shaft (7, 8) and the other intermediate wheel (13, 14).

8. The differential of claim 7, **characterized in that** it comprises, for each of the two intermediate wheels (13, 14), an auxiliary shaft (11, 12) supported at ends thereof by the containing body (2), each intermediate wheel (13, 14) being mounted on a respective auxiliary shaft (11, 12) by means of a plurality of interpositioned rollers (R) arranged in two distinct rolling tracks.

9. The differential of claim 8, **characterized in that** each of the rolling tracks is located at a respective axial end of the intermediate wheel (13, 14).

10. The differential of claim 8 or 9, **characterized in that** at least one of either the auxiliary shaft (11, 12) or the intermediate wheel (13, 14), preferably the intermediate wheel (13, 14), affords a surface (15) in contact with the rollers (R) and exhibiting two opposite variations in diameter, each of the variations in diameter defining an internal shoulder (18) of a respective rolling track of the rollers (R).

11. The differential of claim 8, **characterized in that** the rolling track develops around the main axis of rotation (X).

12. The differential of one or more of claims from 7 to 11, **characterized in that** the containing body (2) comprises two half shells (2a, 2b) couplable to each other by reciprocal positioning along the main axis of rotation (X).

13. The differential of one or more of claims from 7 to 12, **characterized in that** each of the intermediate wheels (13, 14), affords an external thread having a first portion which enmeshes with the other intermediate wheel (13, 14), and a second portion, adjacent to the first portion, which enmeshes with the respective shaft (7, 8) to which the intermediate wheel (13, 14) is coupled.

14. A vehicle having a small turning circle, comprising a mechanical differential (1) according to one or more of the previous claims.

15. The vehicle of claim 14, **characterized in that** it comprises at least a pair of forward non steering wheels and a pair of rear steering wheels, the differential (1) operatively acting on the forward wheels.

16. A fork lift truck, comprising the mechanical differential of one or more of claims from 1 to 13.

17. A machine for handling containers or goods, comprising the mechanical differential (1) of one or more of claims from 1 to 13.
